# EUROPEAN PATENT SPECIFICATION

(11) **EP 3 288 242 B1**
(45) Date of publication and mention of the grant of the patent: **14.08.2019**
(21) Application number: 15891519.9
(22) Date of filing: 13.05.2015
(51) Int. Cl.: H04L 29/12, H04W 88/08

(54) **DOMAIN NAME SYSTEM ACCESSING METHOD AND DEVICE**
VERFAHREN UND VORRICHTUNG FÜR DEN ZUGRIFF AUF EIN DOMÄNENNAMENSYSTEM
PROCÉDÉ ET DISPOSITIF D'ACCÈS À UN SYSTÈME DE NOMS DE DOMAINE

(43) Date of publication of application: 28.02.2018
(73) Proprietor: Huawei Technologies Co., Ltd., Longgang District Shenzhen, Guangdong 518129 (CN)
(72) Inventor: JI, Jiagang, Shenzhen Guangdong 518129 (CN); XIE, Bo, Shenzhen Guangdong 518129 (CN)
(74) Representative: Isarpatent
(86) International application number: PCT/CN2015/078882
(87) International publication number: WO 2016/179816

(56) References cited:
- EP-A1- 2 148 493
- CN-A- 101 984 637
- CN-A- 102 801 823
- CN-A- 103 220 372
- CN-A- 104 243 627
- US-A1- 2013 304 887
- US-A1- 2014 059 071

## Description

### TECHNICAL FIELD

The present invention relates to the field of Internet communications, and in particular, to an access method using a domain name system and an apparatus.

### BACKGROUND

When user equipment (User Equipment, UE) accesses the Internet, a domain name system (Domain Name System, DNS) server of a DNS needs to resolve a domain name accessed by the user equipment to an Internet Protocol (Internet Protocol, IP) address that can be directly read by a machine. The DNS can enable the UE to access the Internet more conveniently by directly using the domain name, and a user no longer needs to remember an IP string that is to be directly read by a machine.

In the prior art, a DNS query process mainly includes the following several steps. First, UE sends a DNS query request packet for a target domain name to a network access apparatus (for example, a base station). Next, the network access apparatus forwards the DNS query request packet to a DNS server. The DNS server generates a response packet according to the DNS query request. Finally, the network access apparatus forwards the response packet of the DNS server to the UE.

However, because a packet between the UE and the DNS server needs to be forwarded by using the network access apparatus, a relatively long delay exists for the DNS server to respond to the DNS query request packet.

US 2014/059071 A1 Discloses providing Domain Name Resolution functionality to data client device accessing network data through an access point. According to some embodiments, an access point may be integral or otherwise functionally associated with a zone specific domain name system (ZSDNS), and the ZSDNS includes a local cache of DNS records, which local cache of DNS records may be zone specific.

EP 2148493 A1 relates to a method to store and retrieve transient data or administrative data for network services in a digital network with multiple access nodes wherein an overlay network in Peer-to-Peer-Technology is set up between access nodes and that the transient data or administrative data is stored multiply in the access nodes and retrieved by a single access node when needed for a network service.

US 2013/304887 A1 relates to reducing latency associated with establishing communication with a server utilizing a wireless communication system are described. One aspect enhances domain name system querying. For example, an electronic device may transmit a request for server to a service providing device. Prior to one of IP address assignment, authentication of the electronic device, or association of a link-layer with the electronic device, a request for domain name resolution for a server may be transmitted to the service providing device. A response is received by the electronic device indicating the network service provided, with the request for domain name resolution being transmitted prior to receiving the response.

### SUMMARY

To resolve a problem of a relatively long delay in responding to a DNS query request packet by a DNS server, the present invention provides an access method using a domain name system and an apparatus. The technical solutions are as follows:
A first aspect provides an access method using a domain name system, including:
receiving, by a network access apparatus, a domain name system DNS query request packet sent by user equipment UE, where the DNS query request packet includes a target domain name, and the DNS query request packet is used to request an Internet Protocol IP address that is of a network application server and that corresponds to the target domain name;
querying, by the network access apparatus, a locally cached correspondence between a domain name and an IP address according to the target domain name;
generating, by the network access apparatus, a first DNS response packet if the target domain name is recorded in the correspondence, where the first DNS response packet includes the target domain name and a first IP address, and the first IP address is an IP address that corresponds to the target domain name and that is recorded in the locally cached correspondence between a domain name and an IP address; and
sending, by the network access apparatus, the first DNS response packet to the UE;
if the target domain name is recorded in the correspondence between a domain name and an IP address according to the target domain name:
sending, by the network access apparatus, the DNS query request packet to a DNS server, so that the DNS server queries, according to the target domain name, a correspondence that is stored in the DNS server and that is between a domain name and an IP address, and determines an IP address corresponding to the target domain name, and the DNS server generates a second DNS response packet according to the target domain name and the IP address corresponding to the target domain name, and sends the second DNS response packet to the network access apparatus;
receiving, by the network access apparatus, the second DNS response packet sent by the DNS server, wherein the second DNS response packet comprises the target domain name and a second IP address, and the second IP address is an IP address that corresponds to the target domain name and that is recorded in the correspondence that is stored in the DNS server and that is between a domain name and an IP address; and
   sending, by the network access apparatus, the second DNS response packet to the UE.

In a possible implementation of the first aspect, the method further includes:
updating the locally cached correspondence between a domain name and an IP address according to a correspondence between the target domain name and the second IP address.

A second aspect provides a network access apparatus, including: a first receiving unit, a query unit, a generation unit, and a first sending unit, where
the first receiving unit is configured to receive a domain name system DNS query request packet sent by UE, where the DNS query request packet includes a target domain name, and the DNS query request packet is used to request an Internet Protocol IP address that is of a network application server and that corresponds to the target domain name;
the query unit is configured to query a locally cached correspondence between a domain name and an IP address according to the target domain name;
the generation unit is configured to generate a first DNS response packet when the target domain name is recorded in the locally cached correspondence between a domain name and an IP address, where the first DNS response packet includes the target domain name and a first IP address, and the first IP address is an IP address that corresponds to the target domain name and that is recorded in the locally cached correspondence between a domain name and an IP address; and
the first sending unit is configured to send the first DNS response packet to the UE;
wherein the network access apparatus further comprises a first further sending unit, a further receiving unit, and a second further sending unit, wherein, if the target domain name is recorded in the correspondence between a domain name and an IP address according to the target domain name:
the first further sending unit is configured to send the DNS query request packet to a DNS server, so that the DNS server queries, according to the target domain name, a correspondence that is stored in the DNS server and that is between a domain name and an IP address, and determines an IP address corresponding to the target domain name, and the DNS server generates a second DNS response packet according to the target domain name and the IP address corresponding to the target domain name, and sends the second DNS response packet to the network access apparatus;
the further receiving unit is configured to receive the second DNS response packet sent by the DNS server, wherein the second DNS response packet comprises the target domain name and a second IP address, and the second IP address is an IP address that corresponds to the target domain name and that is recorded in the correspondence that is stored in the DNS server and that is between a domain name and an IP address; and
   the second further sending unit is configured to send the second DNS response packet to the UE.

In a possible implementation of the second aspect, the apparatus further includes an update unit; and
the update unit is configured to update the locally cached correspondence between a domain name and an IP address according to a correspondence between the target domain name and the second IP address.

It should be understood that, the foregoing general descriptions and the following detailed descriptions are only examples and for explanation, and are not intended to limit the present invention.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic diagram of an environment of an access system using a DNS in an access method using a domain name system according to an embodiment of the present invention;
FIG. 2 is a flowchart of an access method using a domain name system according to an embodiment of the present invention;
FIG. 3 is a flowchart of another access method using a domain name system according to an embodiment of the present invention;
FIG. 4 is a schematic structural diagram of a network access apparatus according to an embodiment of the present invention;
FIG. 5 is a schematic structural diagram of another network access apparatus according to an embodiment of the present invention;
FIG. 6 is a schematic structural diagram of another network access apparatus according to an embodiment of the present invention;
FIG. 7 is a schematic structural diagram of another network access apparatus according to an embodiment of the present invention;
FIG. 8 is a schematic structural diagram of another network access apparatus according to an embodiment of the present invention; and
FIG. 9 is a schematic structural diagram of still another network access apparatus according to an embodiment of the present invention.

### DESCRIPTION OF EMBODIMENTS

To make the objectives, technical solutions, and advantages of the present invention clearer, the following further describes the embodiments of the present invention in detail with reference to the accompanying drawings.

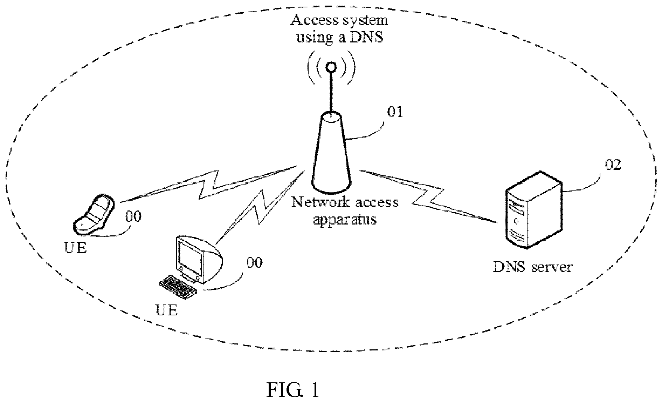

FIG. 1 is a schematic diagram of an environment of an access system using a DNS in an access method using a domain name system according to an embodiment of the present invention. The access system using a DNS includes UE 00, a network access apparatus 01, and a DNS server 02. The UE 00 can send a DNS query request packet to the network access apparatus 01. The network access apparatus 01 can forward the packet or respond to the DNS query request packet. The DNS server 02 can respond to the DNS query request packet. Different standards may be used for the access system using a DNS, and correspondingly, different network access apparatuses may be used. For example, when the access system using a DNS is a Long Term Evolution (Long Term Evolution, LTE) system, the network access apparatus 01 may be an evolved Node B (Evolved Node B, eNodeB). When the access system using a DNS is a Global System for Mobile Communications (Global System for Mobile Communication, GSM) or a Code Division Multiple Access (Code Division Multiple Access, CDMA) system, the network access apparatus 01 may be a base station controller (Base Station Controller, BSC). When the access system using a DNS is a Universal Mobile Telecommunications System (Universal Mobile Telecommunications System, UMTS), the network access apparatus 01 may be a radio network controller (Radio Network Controller, RNC). This is not limited herein in the embodiments of the present invention.

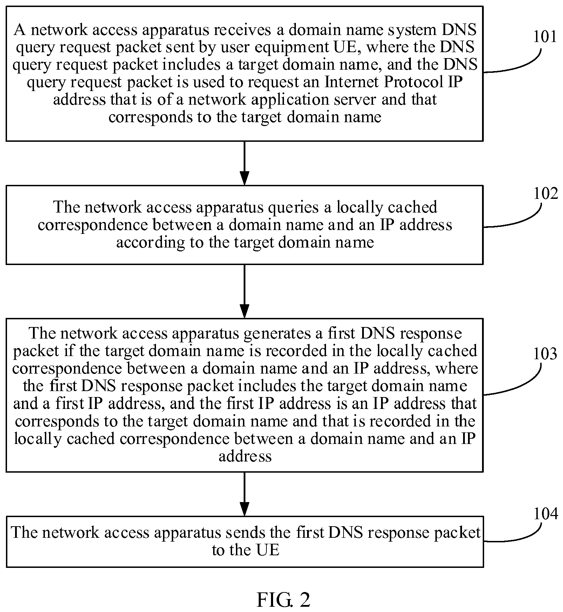

An embodiment of the present invention provides an access method using a domain name system. As shown in FIG. 2, the method is applied to a network access apparatus, and includes the following steps.

Step 101: The network access apparatus receives a domain name system DNS query request packet sent by user equipment UE, where the DNS query request packet includes a target domain name, and the DNS query request packet is used to request an Internet Protocol IP address that is of a network application server and that corresponds to the target domain name.

Step 102: The network access apparatus queries a locally cached correspondence between a domain name and an IP address according to the target domain name.

Step 103: The network access apparatus generates a first DNS response packet if the target domain name is recorded in the locally cached correspondence between a domain name and an IP address, where the first DNS response packet includes the target domain name and a first IP address, and the first IP address is an IP address that corresponds to the target domain name and that is recorded in the locally cached correspondence between a domain name and an IP address.

Step 104: The network access apparatus sends the first DNS response packet to the UE.

In conclusion, according to the access method using a domain name system provided in this embodiment of the present invention, after receiving a DNS query request packet sent by UE, a network access apparatus can query a locally cached correspondence between a domain name and an IP address according to a target domain name, and send a response packet to the UE when the target domain name is recorded in the locally cached correspondence between a domain name and an IP address. Compared with the prior art, in this embodiment, the network access apparatus can directly respond to the DNS query request packet sent by the UE. Therefore, this can reduce a delay in responding to a DNS query request packet.

Optionally, the method further includes:
sending, by the network access apparatus, the DNS query request packet to a DNS server if the target domain name is not recorded in the correspondence, so that the DNS server queries, according to the target domain name, a correspondence that is stored in the DNS server and that is between a domain name and an IP address, and determines an IP address corresponding to the target domain name, and the DNS server generates a second DNS response packet according to the target domain name and the IP address corresponding to the target domain name, and sends the second DNS response packet to the network access apparatus;
receiving, by the network access apparatus, the second DNS response packet sent by the DNS server, where the second DNS response packet includes the target domain name and a second IP address, and the second IP address is an IP address that corresponds to the target domain name and that is recorded in the correspondence that is stored in the DNS server and that is between a domain name and an IP address; and
sending, by the network access apparatus, the second DNS response packet to the UE.

Optionally, after step 102, if the target domain name is recorded in the locally cached correspondence between a domain name and an IP address, the method further includes:
sending, by the network access apparatus, the DNS query request packet to a DNS server, so that the DNS server queries, according to the target domain name, a correspondence that is stored in the DNS server and that is between a domain name and an IP address, and determines an IP address corresponding to the target domain name;
receiving, by the network access apparatus, a second DNS response packet sent by the DNS server, where the second DNS response packet includes the target domain name and a second IP address, and the second IP address is an IP address that corresponds to the target domain name and that is recorded in the correspondence that is stored in the DNS server and that is between a domain name and an IP address; and
sending, by the network access apparatus, the second DNS response packet to the UE.

Optionally, after the receiving the second DNS response packet sent by the DNS server, the method includes:
updating the locally cached correspondence between a domain name and an IP address according to a correspondence between the target domain name and the second IP address.

In conclusion, according to the access method using a domain name system provided in this embodiment of the present invention, after receiving a DNS query request packet sent by UE, a network access apparatus can query a locally cached correspondence between a domain name and an IP address according to a target domain name, and send a response packet to the UE when the target domain name is recorded in the locally cached correspondence between a domain name and an IP address. Compared with the prior art, in this embodiment, the network access apparatus can directly respond to the DNS query request packet sent by the UE. Therefore, this can reduce a delay in responding to a DNS query request packet.

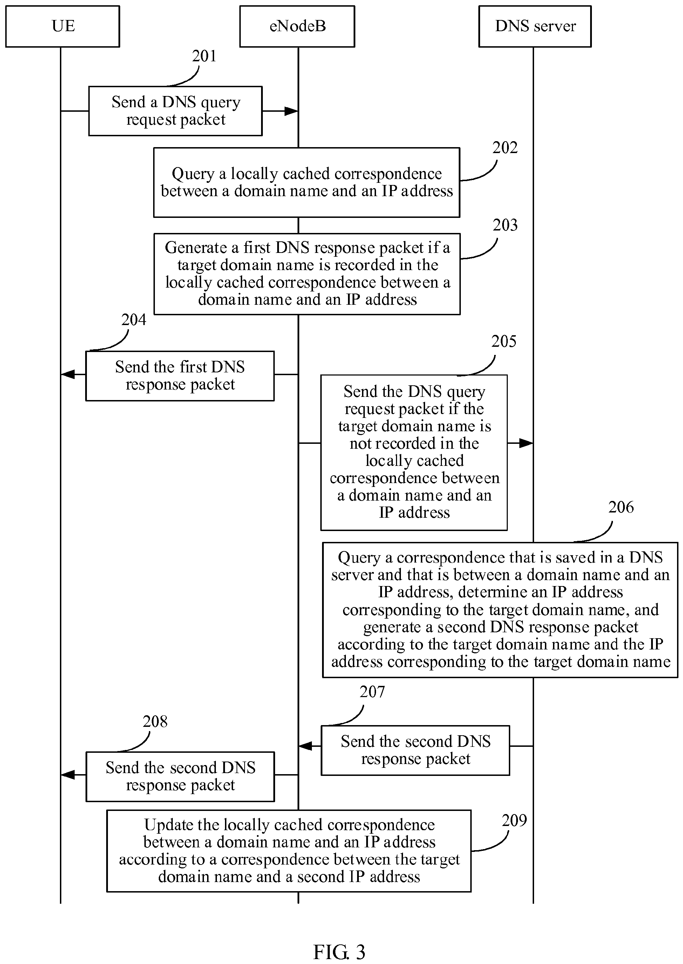

An access method using a domain name system provided in an embodiment of the present invention is described in detail by using an LTE system as an example. As shown in FIG. 3, the method is applied to the access system using a DNS shown in FIG. 1. In the LTE system, a network access apparatus is an eNodeB. The method includes the following steps.

Step 201: UE sends a DNS query request packet to the eNodeB.

The DNS query request packet includes a target domain name, and the DNS query request packet is used to request an IP address that is of a network application server and that corresponds to the target domain name.

Step 202: The eNodeB queries a locally cached correspondence between a domain name and an IP address according to the target domain name.

In a previous access process using a domain name system, when forwarding a DNS response packet returned by a DNS server to the UE, the eNodeB may establish a correspondence between a domain name and an IP address according to a domain name and an IP address that are carried in the DNS response packet, and temporarily save the correspondence, to obtain the locally cached correspondence between a domain name and an IP address.

For example, the locally cached correspondence between a domain name and an IP address in the eNodeB may be shown in Table 1. It is assumed that the eNodeB temporarily saves three correspondences between a domain name and an IP address, where a domain name www.xxxx.com corresponds to an IP address a.b.c.d, a domain name www.yyyy.com corresponds to an IP address e.f.g.h, and a domain name www.zzzz.com corresponds to an IP address h.i.j.k.

**Table 1**

| **Domain name** | **IP address** |
|---|---|
| www.xxxx.com | a.b.c.d |
| www.yyyy.com | e.f.g.h |
| www.zzzz.com | h.i.j.k |

Step 203: The eNodeB generates a first DNS response packet if the target domain name is recorded in the locally cached correspondence between a domain name and an IP address.

The first DNS response packet includes the target domain name and a first IP address, and the first IP address is an IP address that corresponds to the target domain name and that is recorded in the locally cached correspondence between a domain name and an IP address.

For example, if the target domain name included in the DNS query request packet of the UE is www.yyyy.com, as shown in Table 1, the eNodeB temporarily saves the IP address, that is, e.f.g.h, corresponding to the domain name. That is, the first IP address is e.f.g.h. The eNodeB generates the first DNS response packet according to the target domain name www.yyyy.com and the first IP address e.f.g.h. In this way, the first DNS response packet includes the target domain name www.yyyy.com and the first IP address e.f.g.h.

Step 204: The eNodeB sends the first DNS response packet to the UE.

In this embodiment of the present invention, after receiving a DNS query request packet sent by UE, an eNodeB can query a locally cached correspondence between a domain name and an IP address according to a target domain name, and send a response packet to the UE when the target domain name is recorded in the locally cached correspondence between a domain name and an IP address. Compared with the prior art, in this embodiment, the eNodeB can directly respond to the DNS query request packet sent by the UE, and a time consumed by the eNodeB is usually shorter than that consumed by a DNS server to directly respond to the DNS query request packet sent by the UE. Therefore, this can reduce a delay in responding to a DNS query request packet.

Step 205: The eNodeB sends the DNS query request packet to a DNS server if the target domain name is not recorded in the locally cached correspondence between a domain name and an IP address.

For example, if the target domain name included in the DNS query request packet of the UE is www.uuuu.com, as shown in Table 1, the target domain name is not recorded in the correspondence that is cached in the eNodeB and that is between a domain name and an IP address. In this case, the eNodeB sends the DNS query request packet to the DNS server.

Step 206: The DNS server queries, according to the target domain name, a correspondence that is stored in the DNS server and that is between a domain name and an IP address, and determines an IP address corresponding to the target domain name, and the DNS server generates a second DNS response packet according to the target domain name and the IP address corresponding to the target domain name, and sends the second DNS response packet to the network access apparatus.

In this embodiment of the present invention, the DNS server may be a server, a server cluster including several servers, or a cloud computing service center, and may have a distributed database for storing domain names. The DNS server usually stores all domain names and IP addresses that are in the access system using a DNS. All the domain names and IP addresses may be stored in a form of a correspondence between a domain name and an IP address. Therefore, the IP address corresponding to the target domain name can be determined by querying the correspondence that is stored in the DNS server and that is between a domain name and an IP address.

For example, if an IP address that is stored in the DNS server and that corresponds to the target domain name www.uuuu.com is 1.m.n.o, a second IP address is 1.m.n.o. The DNS server generates the second DNS response packet according to the target domain name www.uuuu.com and the second IP address 1.m.n.o. In this way, the second DNS response packet includes the target domain name www.uuuu.com and the second IP address 1.m.n.o.

Step 207: The eNodeB receives the second DNS response packet sent by the DNS server.

The second DNS response packet includes the target domain name and a second IP address, and the second IP address is an IP address that corresponds to the target domain name and that is recorded in the correspondence that is stored in the DNS server and that is between a domain name and an IP address.

Step 208: The eNodeB sends the second DNS response packet to the UE.

In this embodiment of the present invention, the UE can select and receive a DNS response packet that arrives first, and resolve the target domain name according to an IP address included in the DNS response packet. Therefore, an access result of the UE is not affected even if the first IP address included in the first DNS response packet is different from the second IP address included in the second DNS response packet.

Step 209: The eNodeB updates the locally cached correspondence between a domain name and an IP address according to a correspondence between the target domain name and a second IP address.

In this embodiment of the present invention, there may be multiple methods for updating the locally cached correspondence between a domain name and an IP address according to the correspondence between the target domain name and the second IP address. Method 1: If neither the correspondence between the target domain name and the second IP address nor a correspondence between the target domain name and another IP address is recorded in the locally cached correspondence between a domain name and an IP address, the correspondence between the target domain name and the second IP address is added to a local cache. Method 2: If the correspondence between the target domain name and the second IP address is not recorded in the locally cached correspondence between a domain name and an IP address but a correspondence between the target domain name and another IP address is recorded in the locally cached correspondence, the correspondence between the target domain name and another IP address may be overwritten by the correspondence between the target domain name and the second IP address. Alternatively, the correspondence between the target domain name and another IP address and the correspondence between the target domain name and the second IP address may be both recorded, but the correspondence between the target domain name and the second IP address is marked as a latest relationship. Next time when the locally cached correspondence is queried according to the target domain name, the latest relationship, that is, the correspondence between the target domain name and the second IP address, in a latest correspondence between the domain name and an IP address is obtained. Method 3: After the correspondence between the target domain name and the second IP address is matched against the locally cached correspondence between the domain name and an IP address, if the correspondence between the target domain name and the second IP address is recorded in the locally cached correspondence between the domain name and an IP address, the correspondence between the target domain name and the second IP address is kept unchanged.

For example, as shown in Table 1, assuming that the correspondence between the target domain name and the second IP address is a correspondence between the domain name www.uuuu.com and the IP address 1.m.n.o, because the correspondence between the domain name www.uuuu.com and the IP address 1.m.n.o is not recorded in the correspondence that is locally cached in the eNodeB and that is between the target domain name and an IP address, the eNodeB updates the correspondence between the domain name and the IP address into the local cache. An updated locally-cached correspondence between a domain name and an IP address is shown in Table 2.

**Table 2**

| **Domain name** | **IP address** |
|---|---|
| www.xxxx.com | a.b.c.d |
| www.yyyy.com | e.f.g.h |
| www.zzzz.com | h.i.j.k |
| www.uuuu.com | l.m.n.o |

In a practical application, after step 204, no matter whether the target domain name is recorded in the locally cached correspondence between a domain name and an IP address, the eNodeB can send the DNS query request packet to the DNS server, so that the DNS server queries, according to the target domain name, the correspondence that is stored in the DNS server and that is between a domain name and an IP address, and determines an IP address corresponding to the target domain name. Then, step 206 to step 209 are performed. In this case, the UE can select and receive the DNS response packet that arrives first. In this embodiment of the present invention, if the first DNS response packet sent by the eNodeB does not arrive or arrives at the UE after a delay, it can be ensured that the UE can still receive the second DNS response packet generated by the DNS server. Therefore, reliability of the access system using a DNS is improved by sending two response packets.

In conclusion, according to the access method using a domain name system provided in this embodiment of the present invention, after receiving a DNS query request packet sent by UE, a network access apparatus can query a locally cached correspondence between a domain name and an IP address according to a target domain name, and send a response packet to the UE when the target domain name is recorded in the locally cached correspondence between a domain name and an IP address. Compared with the prior art, in this embodiment, the network access apparatus can directly respond to the DNS query request packet sent by the UE. Therefore, this can reduce a delay in responding to a DNS query request packet.

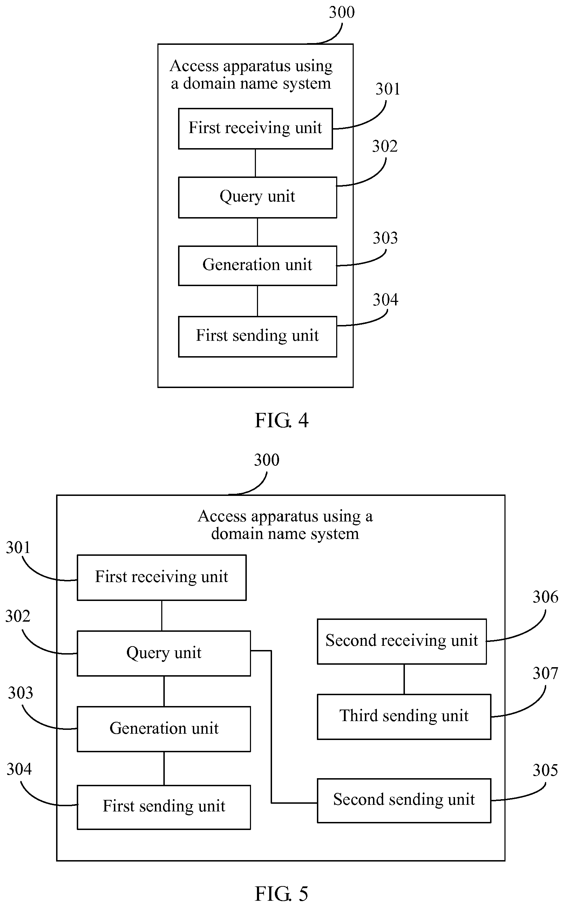

An embodiment of the present invention provides a network access apparatus 300. As shown in FIG. 4, the apparatus 300 includes a first receiving unit 301, a query unit 302, a generation unit 303, and a first sending unit 304.

The first receiving unit 301 is configured to receive a domain name system DNS query request packet sent by UE, where the DNS query request packet includes a target domain name, and the DNS query request packet is used to request an Internet Protocol IP address that is of a network application server and that corresponds to the target domain name.

The query unit 302 is configured to query a locally cached correspondence between a domain name and an IP address according to the target domain name.

The generation unit 303 is configured to generate a first DNS response packet when the target domain name is recorded in the locally cached correspondence between a domain name and an IP address. The first DNS response packet includes the target domain name and a first IP address, and the first IP address is an IP address that corresponds to the target domain name and that is recorded in the locally cached correspondence between a domain name and an IP address.

The first sending unit 304 is configured to send the first DNS response packet to the UE.

In conclusion, according to the network access apparatus provided in this embodiment of the present invention, after the first receiving unit receives a DNS query request packet sent by UE, the query unit can query a locally cached correspondence between a domain name and an IP address according to a target domain name; the generation unit can generate a DNS response packet when the target domain name is recorded in the locally cached correspondence between a domain name and an IP address; and the first sending unit can send the DNS response packet to the UE. Compared with the prior art, in this embodiment of the present invention, the network access apparatus can directly respond to the DNS query request packet sent by the UE. Therefore, this can reduce a delay in responding to a DNS query request packet.

An embodiment of the present invention provides another network access apparatus 300. The network access apparatus 300 may be applied to the access system using a DNS in FIG. 1. When the access system using a DNS is an LTE system, the network access apparatus 300 may be an eNodeB. When the access system using a DNS is a GSM or a CDMA system, the network access apparatus 300 may be a BSC. When the access system using a DNS is a UMTS, the network access apparatus 300 may be an RNC. This is not limited in this embodiment of the present invention. As shown in FIG. 5, the apparatus 300 further includes a second sending unit 305, a second receiving unit 306, and a third sending unit 307.

The second sending unit 305 is configured to send the DNS query request packet to a DNS server when the target domain name is not recorded in the locally cached correspondence between a domain name and an IP address, so that the DNS server queries, according to the target domain name, a correspondence that is stored in the DNS server and that is between a domain name and an IP address, and determines an IP address corresponding to the target domain name, and the DNS server generates a second DNS response packet according to the target domain name and the IP address corresponding to the target domain name, and sends the second DNS response packet to the network access apparatus.

The second receiving unit 306 is configured to receive the second DNS response packet sent by the DNS server, where the second DNS response packet includes the target domain name and a second IP address, and the second IP address is an IP address that corresponds to the target domain name and that is recorded in the correspondence that is stored in the DNS server and that is between a domain name and an IP address.

The third sending unit 307 is configured to send the second DNS response packet to the UE.

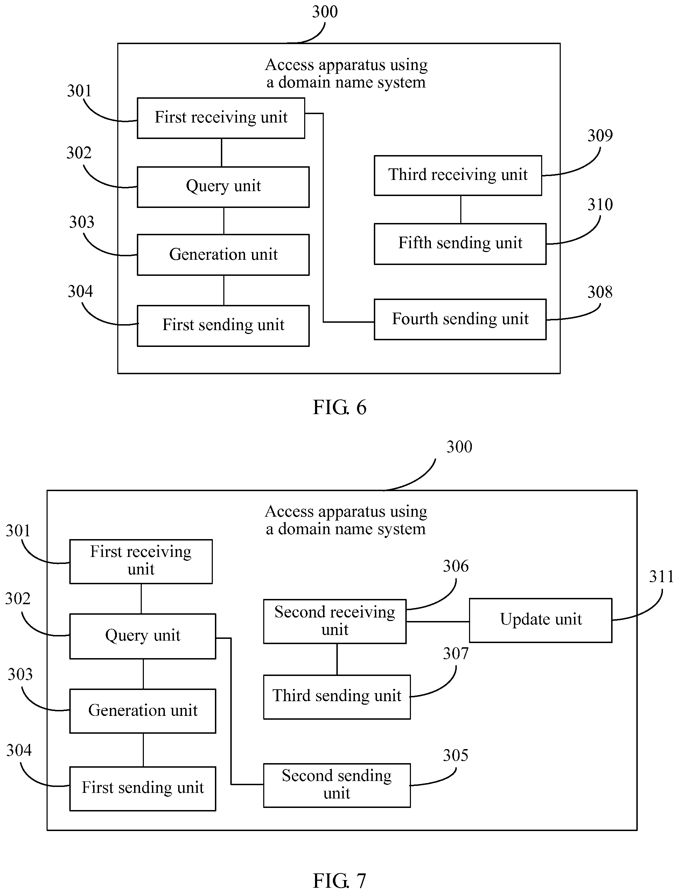

An embodiment of the present invention provides another network access apparatus 300. As shown in FIG. 6, the apparatus 300 further includes a fourth sending unit 308, a third receiving unit 309, and a fifth sending unit 310.

The fourth sending unit 308 is configured to send the DNS query request packet to a DNS server if the target domain name is recorded in the locally cached correspondence between a domain name and an IP address, so that the DNS server queries, according to the target domain name, a correspondence that is stored in the DNS server and that is between a domain name and an IP address, and determines an IP address corresponding to the target domain name, and the DNS server generates a second DNS response packet according to the target domain name and the IP address corresponding to the target domain name, and sends the second DNS response packet to the network access apparatus.

The third receiving unit 309 is configured to receive the second DNS response packet sent by the DNS server. The second DNS response packet includes the target domain name and a second IP address, and the second IP address is an IP address that corresponds to the target domain name and that is recorded in the correspondence that is stored in the DNS server and that is between a domain name and an IP address.

The fifth sending unit 310 is configured to send the second DNS response packet to the UE.

An embodiment of the present invention provides another network access apparatus 300. As shown in FIG. 7, the apparatus 300 further includes a second sending unit 305, a second receiving unit 306, a third sending unit 307, and an update unit 311.

The second sending unit 305 is configured to send the DNS query request packet to a DNS server when the target domain name is not recorded in the locally cached correspondence between a domain name and an IP address, so that the DNS server queries, according to the target domain name, a correspondence that is stored in the DNS server and that is between a domain name and an IP address, and determines an IP address corresponding to the target domain name, and the DNS server generates a second DNS response packet according to the target domain name and the IP address corresponding to the target domain name, and sends the second DNS response packet to the network access apparatus.

The second receiving unit 306 is configured to receive the second DNS response packet sent by the DNS server. The second DNS response packet includes the target domain name and a second IP address, and the second IP address is an IP address that corresponds to the target domain name and that is recorded in the correspondence that is stored in the DNS server and that is between a domain name and an IP address.

The third sending unit 307 is configured to send the second DNS response packet to the UE.

The update unit 311 is configured to update the locally cached correspondence between a domain name and an IP address according to a correspondence between the target domain name and the second IP address.

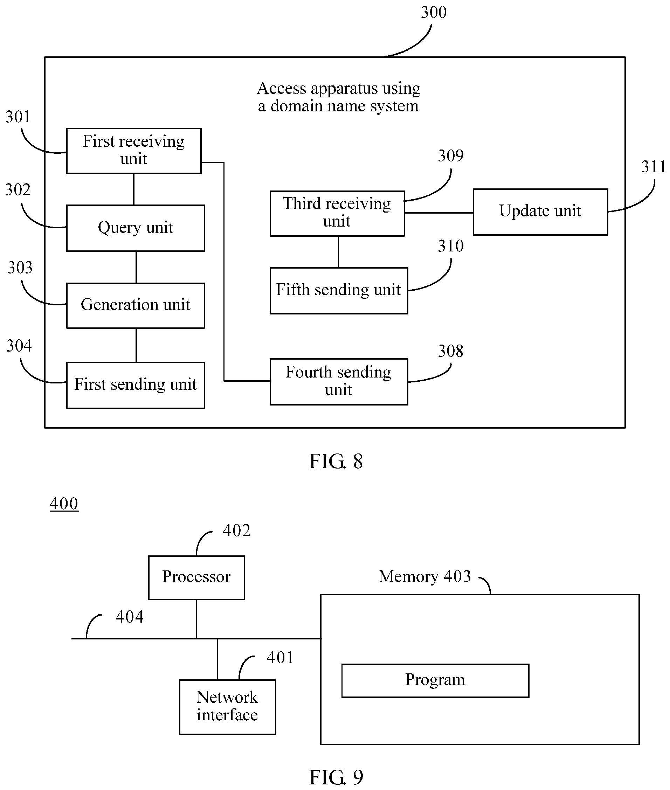

An embodiment of the present invention provides another network access apparatus 300. As shown in FIG. 8, the apparatus 300 further includes a fourth sending unit 308, a third receiving unit 309, a fifth sending unit 310, and an update unit 311.

The fourth sending unit 308 is configured to send the DNS query request packet to a DNS server if the target domain name is recorded in the locally cached correspondence between a domain name and an IP address, so that the DNS server queries, according to the target domain name, a correspondence that is stored in the DNS server and that is between a domain name and an IP address, and determines an IP address corresponding to the target domain name, and the DNS server generates a second DNS response packet according to the target domain name and the IP address corresponding to the target domain name, and sends the second DNS response packet to the network access apparatus.

The third receiving unit 309 is configured to receive the second DNS response packet sent by the DNS server, where the second DNS response packet includes the target domain name and a second IP address, and the second IP address is an IP address that corresponds to the target domain name and that is recorded in the correspondence that is stored in the DNS server and that is between a domain name and an IP address.

The fifth sending unit 310 is configured to send the second DNS response packet to the UE.

The update unit 311 is configured to update the locally cached correspondence between a domain name and an IP address according to a correspondence between the target domain name and the second IP address.

In conclusion, according to the network access apparatus provided in this embodiment of the present invention, after the first receiving unit receives a DNS query request packet sent by UE, the query unit can query a locally cached correspondence between a domain name and an IP address according to a target domain name; the generation unit generates a DNS response packet when the target domain name is recorded in the locally cached correspondence between a domain name and an IP address; and the first sending unit sends the DNS response packet to the UE. Compared with the prior art, in this embodiment of the present invention, the network access apparatus can directly respond to the DNS query request packet sent by the UE. Therefore, this can reduce a delay in responding to a DNS query request packet.

An embodiment of the present invention provides still another network access apparatus 400. As shown in FIG. 9, the network access apparatus 400 includes a network interface 401, a processor 402, a memory 403, and a bus 404. The bus 404 is configured to connect the network interface 401, the processor 402, and the memory 403. The processor 402 is configured to execute a program stored in the memory 403.

The network interface 401 is configured to receive a domain name system DNS query request packet sent by UE, where the DNS query request packet includes a target domain name, and the DNS query request packet is used to request an Internet Protocol IP address that is of a network application server and that corresponds to the target domain name.

The processor 402 is configured to query a locally cached correspondence between a domain name and an IP address according to the target domain name.

The processor 402 is further configured to generate a first DNS response packet when the target domain name is recorded in the locally cached correspondence between a domain name and an IP address, where the first DNS response packet includes the target domain name and a first IP address, and the first IP address is an IP address that corresponds to the target domain name and that is recorded in the locally cached correspondence between a domain name and an IP address.

The network interface 401 is further configured to send the first DNS response packet to the UE.

Optionally, the network interface 401 is further configured to send the DNS query request packet to a DNS server when the target domain name is not recorded in the locally cached correspondence between a domain name and an IP address, so that the DNS server queries, according to the target domain name, a correspondence that is stored in the DNS server and that is between a domain name and an IP address, and determines an IP address corresponding to the target domain name, and the DNS server generates a second DNS response packet according to the target domain name and the IP address corresponding to the target domain name, and sends the second DNS response packet to the network access apparatus.

Optionally, the network interface 401 is further configured to receive the second DNS response packet sent by the DNS server, where the second DNS response packet includes the target domain name and a second IP address, and the second IP address is an IP address that corresponds to the target domain name and that is recorded in the correspondence that is stored in the DNS server and that is between a domain name and an IP address.

Optionally, the network interface 401 is further configured to send the second DNS response packet to the UE.

Optionally, the network interface 401 is further configured to send the DNS query request packet to a DNS server if the target domain name is recorded in the locally cached correspondence between a domain name and an IP address, so that the DNS server queries, according to the target domain name, a correspondence that is stored in the DNS server and that is between a domain name and an IP address, and determines an IP address corresponding to the target domain name, and the DNS server generates a second DNS response packet according to the target domain name and the IP address corresponding to the target domain name, and sends the second DNS response packet to the network access apparatus.

Optionally, the network interface 401 is further configured to receive the second DNS response packet sent by the DNS server, where the second DNS response packet includes the target domain name and a second IP address, and the second IP address is an IP address that corresponds to the target domain name and that is recorded in the correspondence that is stored in the DNS server and that is between a domain name and an IP address.

Optionally, the network interface 401 is further configured to send the second DNS response packet to the UE.

Optionally, the processor 402 is further configured to update the locally cached correspondence between a domain name and an IP address according to a correspondence between the target domain name and the second IP address.

In conclusion, according to the network access apparatus provided in this embodiment of the present invention, after the network interface receives a DNS query request packet sent by UE, the processor can query a locally cached correspondence between a domain name and an IP address according to a target domain name; and the processor can generate a DNS response packet when the target domain name is recorded in the locally cached correspondence between a domain name and an IP address, and send the DNS response packet to the UE by using a transmitter. Compared with the prior art, in this embodiment of the present invention, the network access apparatus can directly respond to the DNS query request packet sent by the UE. Therefore, this can reduce a delay in responding to a DNS query request packet.

An embodiment of the present invention provides an access system using a domain name system. The system includes the network access apparatus 300 shown in any one of FIG. 4 to FIG. 8.

An embodiment of the present invention provides another access system using a domain name system. The system includes the network access apparatus 400 shown in FIG. 9.

It may be clearly understood by a person skilled in the art that, for the purpose of convenient and brief description, for a detailed working process of the foregoing system, apparatus, and unit, refer to a corresponding process in the foregoing method embodiments, and details are not described herein.

A person of ordinary skill in the art may understand that all or some of the steps of the embodiments may be implemented by hardware or a program instructing related hardware. The program may be stored in a computer-readable storage medium. The storage medium may include: a read-only memory, a magnetic disk, or an optical disc.

The foregoing descriptions are merely exemplary embodiments of the present invention, but are not intended to limit the present invention. Any modification, equivalent replacement, and improvement made without departing from the principle of the present invention shall fall within the protection scope of the present invention.

## Claims

1. An access method using a domain name system, comprising:
receiving (101), by a network access apparatus, a domain name system, DNS, query request packet sent by user equipment, UE, wherein the DNS query request packet comprises a target domain name, and the DNS query request packet is used to request an Internet Protocol, IP, address that is of a network application server and that corresponds to the target domain name;
querying (102), by the network access apparatus, a locally cached correspondence between a domain name and an IP address according to the target domain name;
generating (103), by the network access apparatus, a first DNS response packet if the target domain name is recorded in the correspondence, wherein the first DNS response packet comprises the target domain name and a first IP address, and the first IP address is an IP address that corresponds to the target domain name and that is recorded in the locally cached correspondence between a domain name and an IP address; and
sending (104), by the network access apparatus, the first DNS response packet to the UE,
**characterized by**
if the target domain name is recorded in the correspondence between a domain name and an IP address according to the target domain name:
sending, by the network access apparatus, the DNS query request packet to a DNS server, so that the DNS server queries, according to the target domain name, a correspondence that is stored in the DNS server and that is between a domain name and an IP address, and determines an IP address corresponding to the target domain name, and the DNS server generates a second DNS response packet according to the target domain name and the IP address corresponding to the target domain name, and sends the second DNS response packet to the network access apparatus;
receiving, by the network access apparatus, the second DNS response packet sent by the DNS server, wherein the second DNS response packet comprises the target domain name and a second IP address, and the second IP address is an IP address that corresponds to the target domain name and that is recorded in the correspondence that is stored in the DNS server and that is between a domain name and an IP address; and
sending, by the network access apparatus, the second DNS response packet to the UE.

2. The method according to claim 1, wherein the method further comprises:
updating the locally cached correspondence between a domain name and an IP address according to a correspondence between the target domain name and the second IP address.

3. A network access apparatus, comprising: a first receiving unit (301), a query unit (302), a generation unit (303), and a first sending unit (304), wherein
the first receiving unit (301) is configured to receive a domain name system DNS query request packet sent by user equipment UE, wherein the DNS query request packet comprises a target domain name, and the DNS query request packet is used to request an Internet Protocol IP address that is of a network application server and that corresponds to the target domain name;
the query unit (302) is configured to query a locally cached correspondence between a domain name and an IP address according to the target domain name;
the generation unit (303) is configured to generate a first DNS response packet when the target domain name is recorded in the locally cached correspondence between a domain name and an IP address, wherein the first DNS response packet comprises the target domain name and a first IP address, and the first IP address is an IP address that corresponds to the target domain name and that is recorded in the locally cached correspondence between a domain name and an IP address; and
the first sending unit (304) is configured to send the first DNS response packet to the UE,
**characterized by**
a first further sending unit (308), a further receiving unit (309), and a second further sending unit (310), wherein, if the target domain name is recorded in the correspondence between a domain name and an IP address according to the target domain name:
the first further sending unit (308) is configured to send the DNS query request packet to a DNS server, so that the DNS server queries, according to the target domain name, a correspondence that is stored in the DNS server and that is between a domain name and an IP address, and determines an IP address corresponding to the target domain name, and the DNS server generates a second DNS response packet according to the target domain name and the IP address corresponding to the target domain name, and sends the second DNS response packet to the network access apparatus;
the further receiving unit (309) is configured to receive the second DNS response packet sent by the DNS server, wherein the second DNS response packet comprises the target domain name and a second IP address, and the second IP address is an IP address that corresponds to the target domain name and that is recorded in the correspondence that is stored in the DNS server and that is between a domain name and an IP address; and
the second further sending unit (310) is configured to send the second DNS response packet to the UE.

4. The apparatus according to claim 3, wherein the apparatus further comprises an update unit (311); and
the update unit (311) is configured to update the locally cached correspondence between a domain name and an IP address according to a correspondence between the target domain name and the second IP address.

## Patentansprüche

1. Zugriffsverfahren unter Verwendung eines Domänennamensystems, das Folgendes umfasst:
Empfangen (101) eines von einem Benutzerendgerät, UE, gesendeten Domänennamensystem-Anfrage-Anforderungspakets, DNS-Anfrage-Anforderungspakets, durch eine Netzwerkzugriffsvorrichtung, wobei das DNS-Anfrage-Anforderungspaket einen Zieldomänennamen umfasst und das DNS-Anfrage-Anforderungspaket zum Anfragen einer Internetprotokoll-Adresse, IP-Adresse, verwendet wird, die von einem Netzwerkanwendungsserver stammt und die dem Zieldomänennamen entspricht;
Abfragen (102) einer lokal zwischengespeicherten Korrespondenz zwischen einem Domänennamen und einer IP-Adresse gemäß dem Zieldomänennamen durch die Netzwerkzugriffsvorrichtung;
Erzeugen (103) eines ersten DNS-Antwortpakets durch die Netzwerkzugriffsvorrichtung, wenn der Zieldomänenname in der Korrespondenz aufgezeichnet ist, wobei das erste DNS-Antwortpaket den Zieldomänennamen und eine erste IP-Adresse umfasst und die erste IP-Adresse eine IP-Adresse ist, die dem Zieldomänennamen entspricht und die in der lokal zwischengespeicherten Korrespondenz zwischen einem Domänennamen und einer IP-Adresse aufgezeichnet ist; und
Senden (104) des ersten DNS-Antwortpakets durch die Netzwerkzugriffsvorrichtung an das UE, **dadurch gekennzeichnet, dass**
wenn der Zieldomänenname in der Korrespondenz zwischen einem Domänennamen und einer IP-Adresse gemäß dem Zieldomänennamen aufgezeichnet ist:
Senden des DNS-Anfrage-Anforderungspakets durch die Netzwerkzugriffsvorrichtung an einen DNS-Server, sodass der DNS-Server gemäß dem Zieldomänennamen eine Korrespondenz anfragt, die im DNS-Server gespeichert ist und die zwischen einem Domänennamen und einer IP-Adresse steht, und eine IP-Adresse bestimmt, die dem Zieldomänennamen entspricht, wobei der DNS-Server ein zweites DNS-Antwortpaket gemäß dem Zieldomänennamen und der IP-Adresse erzeugt, die dem Zieldomänennamen entspricht, und das zweite DNS-Antwortpaket an die Netzwerkzugriffsvorrichtung sendet;
Empfangen des vom DNS-Server gesendeten zweiten DNS-Antwortpakets durch die Netzwerkzugriffsvorrichtung, wobei das zweite DNS-Antwortpaket den Zieldomänennamen und eine zweite IP-Adresse umfasst und die zweite IP-Adresse eine IP-Adresse ist, die dem Zieldomänennamen entspricht und die in der Korrespondenz aufgezeichnet ist, die im DNS-Speicher gespeichert ist und sich zwischen einem Domänennamen und einer IP-Adresse befindet; und
Senden des zweiten DNS-Antwortpakets durch die Netzwerkzugriffsvorrichtung an das UE.

2. Verfahren nach Anspruch 1, wobei das Verfahren darüber hinaus Folgendes umfasst:
Aktualisieren der lokal zwischengespeicherten Korrespondenz zwischen einem Domänennamen und einer IP-Adresse gemäß einer Korrespondenz zwischen dem Zieldomänennamen und der zweiten IP-Adresse.

3. Netzwerkzugriffsvorrichtung, die Folgendes umfasst: eine erste Empfangseinheit (301), eine Abfrageeinheit (302), eine Erzeugungseinheit (303) und eine erste Sendeeinheit (304), wobei
die erste Empfangseinheit (301) konfiguriert ist zum Empfangen eines von einem Benutzerendgerät, UE, gesendeten Domänennamensystem-Anfrage-Anforderungspakets, DNS-Anfrage-Anforderungspakets, wobei das DNS-Anfrage-Anforderungspaket einen Zieldomänennamen umfasst und das DNS-Anfrage-Anforderungspaket zum Anfragen einer Internetprotokoll-Adresse, IP-Adresse, verwendet wird, die von einem Netzwerkanwendungsserver stammt und die dem Zieldomänennamen entspricht;
die Abfrageeinheit (302) konfiguriert ist zum Abfragen einer lokal zwischengespeicherten Korrespondenz zwischen einem Domänennamen und einer IP-Adresse gemäß dem Zieldomänennamen;
die Erzeugungseinheit (303) konfiguriert ist zum Erzeugen eines ersten DNS-Antwortpakets, wenn der Zieldomänenname in der lokal zwischengespeicherten Korrespondenz zwischen einem Domänennamen und einer IP-Adresse aufgezeichnet ist, wobei das erste DNS-Antwortpaket den Zieldomänennamen und eine erste IP-Adresse umfasst und die erste IP-Adresse eine IP-Adresse ist, die dem Zieldomänennamen entspricht und die in der lokal zwischengespeicherten Korrespondenz zwischen einem Domänennamen und einer IP-Adresse aufgezeichnet ist; und
die erste Sendeeinheit (304) konfiguriert ist zum Senden des ersten DNS-Antwortpakets an das UE, **gekennzeichnet durch**
eine erste weitere Sendeeinheit (308), eine weitere Empfangseinheit (309) und eine zweite weitere Sendeeinheit (310), wobei, wenn der Zieldomänenname in der Korrespondenz zwischen einem Domänennamen und einer IP-Adresse gemäß dem Zieldomänennamen aufgezeichnet ist:
die erste weitere Sendeeinheit (308) konfiguriert ist zum Senden des DNS-Anfrage-Anforderungspakets an einen DNS-Server, sodass der DNS-Server gemäß dem Zieldomänennamen eine Korrespondenz anfragt, die im DNS-Server gespeichert ist und die zwischen einem Domänennamen und einer IP-Adresse steht, und eine IP-Adresse bestimmt, die dem Zieldomänennamen entspricht, wobei der DNS-Server ein zweites DNS-Antwortpaket gemäß dem Zieldomänennamen und der IP-Adresse erzeugt, die dem Zieldomänennamen entspricht, und das zweite DNS-Antwortpaket an die Netzwerkzugriffsvorrichtung sendet;
die weitere Empfangseinheit (309) konfiguriert ist zum Empfangen des vom DNS-Server gesendeten zweiten DNS-Antwortpakets, wobei das zweite DNS-Antwortpaket den Zieldomänennamen und eine zweite IP-Adresse umfasst und die zweite IP-Adresse eine IP-Adresse ist, die dem Zieldomänennamen entspricht und die in der Korrespondenz aufgezeichnet ist, die im DNS-Speicher gespeichert ist und sich zwischen einem Domänennamen und einer IP-Adresse befindet; und
die zweite weitere Sendeeinheit (310) konfiguriert ist zum Senden des zweiten DNS-Antwortpakets an das UE.

4. Vorrichtung nach Anspruch 3, wobei die Vorrichtung darüber hinaus eine Aktualisierungseinheit (311) umfasst; und
die Aktualisierungseinheit (311) konfiguriert ist zum Aktualisieren der lokal zwischengespeicherten Korrespondenz zwischen einem Domänennamen und einer IP-Adresse gemäß einer Korrespondenz zwischen dem Zieldomänennamen und der zweiten IP-Adresse.

## Revendications

1. Procédé d'accès utilisant un système de noms de domaine, comprenant les étapes suivantes :
recevoir (101), par un appareil d'accès au réseau, un paquet de demande de requête d'un système de noms de domaine, DNS, envoyé par un équipement utilisateur, UE, où le paquet de demande de requête de DNS comprend un nom de domaine cible, et le paquet de demande de requête de DNS est utilisé pour demander une adresse de protocole Internet, IP, d'un serveur d'applications réseau et qui correspond au nom de domaine cible ;
interroger (102), par l'appareil d'accès au réseau, une correspondance mise en cache localement entre un nom de domaine et une adresse IP en fonction du nom de domaine cible ;
générer (103), par l'appareil d'accès au réseau, un premier paquet de réponse DNS si le nom de domaine cible est enregistré dans la correspondance, où le premier paquet de réponse DNS comprend le nom de domaine cible et une première adresse IP, et la première adresse IP est une adresse IP qui correspond au nom de domaine cible et qui est enregistrée dans la correspondance mise en cache localement entre un nom de domaine et une adresse IP ; et
envoyer (104), par l'appareil d'accès au réseau, le premier paquet de réponse DNS à l'UE,
**caractérisé par** les étapes suivantes :
si le nom de domaine cible est enregistré dans la correspondance entre un nom de domaine et une adresse IP selon le nom de domaine cible :
envoyer, par l'appareil d'accès au réseau, le paquet de demande de requête de DNS à un serveur DNS, de manière à ce que le serveur DNS interroge, en fonction du nom de domaine cible, une correspondance qui est stockée dans le serveur DNS et qui se trouve entre un nom de domaine et une adresse IP, et détermine une adresse IP correspondant au nom de domaine cible, et le serveur DNS génère un second paquet de réponse DNS en fonction du nom de domaine cible et de l'adresse IP correspondant au nom de domaine cible et envoie le second paquet de réponse DNS à l'appareil d'accès au réseau ;
recevoir, par l'appareil d'accès au réseau, le second paquet de réponse DNS envoyé par le serveur DNS, où le second paquet de réponse DNS comprend le nom de domaine cible et une seconde adresse IP, et la seconde adresse IP est une adresse IP qui correspond au nom de domaine cible et qui est enregistrée dans la correspondance qui est stockée dans le serveur DNS et qui se trouve entre un nom de domaine et une adresse IP ; et
envoyer, par l'appareil d'accès au réseau, le second paquet de réponse DNS à l'UE.

2. Procédé selon la revendication 1, dans lequel le procédé comprend en outre l'étape suivante :
mettre à jour de la correspondance mise en cache localement entre un nom de domaine et une adresse IP en fonction d'une correspondance entre le nom de domaine cible et la seconde adresse IP.

3. Appareil d'accès au réseau, comprenant : une première unité de réception (301), une unité d'interrogation (302), une unité de génération (303) et une première unité d'envoi (304), où :
la première unité de réception (301) est configurée pour recevoir un paquet de demande de requête de système de noms de domaine, DNS, envoyé par un équipement utilisateur UE, où le paquet de demande de requête DNS comprend un nom de domaine cible, et le paquet de demande de requête DNS est utilisé pour demander une adresse de protocole Internet, IP, d'un serveur d'applications réseau et qui correspond au nom de domaine cible ;
l'unité d'interrogation (302) est configurée pour interroger une correspondance mise en cache localement entre un nom de domaine et une adresse IP en fonction du nom de domaine cible ;
l'unité de génération (303) est configurée pour générer un premier paquet de réponse DNS lorsque le nom de domaine cible est enregistré dans la correspondance mise en cache localement entre un nom de domaine et une adresse IP, où le premier paquet de réponse DNS comprend le nom de domaine cible et une première adresse IP, et la première adresse IP est une adresse IP qui correspond au nom de domaine cible et qui est enregistrée dans la correspondance mise en cache localement entre un nom de domaine et une adresse IP ; et
la première unité d'envoi (304) est configurée pour envoyer le premier paquet de réponse DNS à l'UE,
l'appareil étant **caractérisé par** :
une première unité d'envoi supplémentaire (308), une unité de réception supplémentaire (309) et une seconde unité d'envoi supplémentaire (310), où, si le nom de domaine cible est enregistré dans la correspondance entre un nom de domaine et une adresse IP selon le nom de domaine cible :
la première unité d'envoi supplémentaire (308) est configurée pour envoyer le paquet de demande de requête de DNS à un serveur DNS, de manière à ce que le serveur DNS interroge, en fonction du nom de domaine cible, une correspondance qui est stockée dans le serveur DNS et qui se trouve entre un nom de domaine et une adresse IP, et détermine une adresse IP correspondant au nom de domaine cible, et le serveur DNS génère un second paquet de réponse DNS en fonction du nom de domaine cible et de l'adresse IP correspondant au nom de domaine cible, et envoie le second paquet de réponse DNS au dispositif d'accès au réseau ;
l'unité de réception supplémentaire (309) est configurée pour recevoir le second paquet de réponse DNS envoyé par le serveur DNS, où le second paquet de réponse DNS comprend le nom de domaine cible et une seconde adresse IP, et la seconde adresse IP est une adresse IP qui correspond au nom de domaine cible et qui est enregistrée dans la correspondance qui est stockée sur le serveur DNS et qui se trouve entre un nom de domaine et une adresse IP ; et
la seconde unité d'envoi supplémentaire (310) est configurée pour envoyer le second paquet de réponse DNS à l'UE.

4. Appareil selon la revendication 3, dans lequel l'appareil comprend en outre une unité de mise à jour (311) ; et
l'unité de mise à jour (311) est configurée pour mettre à jour la correspondance mise en cache localement entre un nom de domaine et une adresse IP en fonction d'une correspondance entre le nom de domaine cible et la seconde adresse IP.
